# EUROPÄISCHE PATENTSCHRIFT

(11) **EP 0 638 975 B1**
(45) Veröffentlichungstag und Bekanntmachung des Hinweises auf die Patenterteilung: **11.06.1997**
(21) Anmeldenummer: 94112368.9
(22) Anmeldetag: 08.08.1994
(51) Int. Cl.: H02G 15/013

(54) **Muffenkopf mit mehreren geteilten Kabeleinführungen**
Sleeve end with a plurality of split cable inlets
Extrémité de manchon à pluralité d'entrées subdivisées de câbles

(30) Priorität: 11.08.1993 DE 4326971
(43) Veröffentlichungstag der Anmeldung: 15.02.1995
(73) Patentinhaber: SIEMENS AKTIENGESELLSCHAFT, 80333 München (DE)
(72) Erfinder: Kunze, Dieter, D-82061 Neuried (DE); Kreutz, Dieter, D-82031 Grünwald (DE)

(56) Entgegenhaltungen:
- EP-A- 0 309 895
- EP-A- 0 402 653
- FR-A- 2 274 125
- FR-A- 2 649 838
- GB-A- 724 596
- US-A- 2 688 651
- US-A- 2 771 502
- US-A- 3 054 847

## Beschreibung

Die Erfindung betrifft einen Muffenkopf mit mehreren in Längsrichtung geteilten Kabeleinführungen mit Ringdichtungen aus elastischem Material in den Einführungsöffnungen und mit Druckmitteln.

Aus der deutschen Offenlegungsschrift 24 27 677 ist ein Muffenkopf mit mehreren in Längsrichtung geteilten Kabeleinführungen bekannt, wobei diese Kabeleinführungsöffnungen je nach Bedarf ausgeschnitten werden müssen. Als Dichtungsmittel wird jeweils ein bandförmiges plastisches Dichtungsmaterial eingelegt. Die Teilung des Muffenkopfes erfolgt durch parallele Trennebenen so, daß mehrere Dichtungskörpersegmente gebildet werden, in denen dann eine relativ beschränkte Anzahl von Kabeln eingeführt werden kann.

Aus der europäischen Patentanmeldung 0 402 653-A2 sind Kabeleinführungsdichtungen aus verformbarem Material in Form eines ringförmigen Stopfens aus einem geschäumten Elastomer bekannt, der in eine Kabeleinführungsöffnung in Form einer zylindrischen Hülse eines Gehäuses eingesetzt wird. Die Verformung solcher Dichtungen erfolgt nach der Art des einfachen und bekannten Stopfbuchsenprinzips.

Aus EP-A-0 309 895 ist eine explosionsgeschützte und/oder schlagwettergeschützte Steckdurchführung bekannt, die aus einem Hülsenkörper und einem eingefügten trommelartigen Grundkörper besteht, der an seinen beiden Enden gleichmäßig am Umfang verteilt, axial verlaufende, jeweils miteinander fluchtende Nuten aufweist, in die Kabellitzen mit ihrer Isolation einrastbar sind. Innerhalb des Hülsenkörpers befindet sich ein Gießharzausguß, der die abisolierten Bereiche der Kabellitzen abdeckt.

Weiterhin ist aus US-A-2 688 651 eine ungeteilte Kabeleinführungsdichtung bekannt, bei der durch eine kegelig geformte Wandung der Einführungsöffnung eine angepaßte Ringdichtung in axialer Richtung verpreßt wird.

Aufgabe vorliegender Erfindung ist, einen Muffenkopf zu schaffen, bei dem eine Vielzahl von Kabeleinführungen mit Längsteilungen möglich sind, so daß entsprechend viele ungeschnittene Kabel eingeführt werden können, wobei die Abdichtungen in einfacher Weise mit vorgeformten Dichtungseinheiten bewerkstelligt werden sollen. Die gestellte Aufgabe wird nun mit einem Muffenkopf der eingangs beschriebenen Art dadurch gelöst, daß er aus einem Zentralteil und einem korrespondierenden Ringteil besteht, das die Kabeleinführungsöffnungen in der Trennfläche zwischen dem Zentralteil und dem Ringteil so angeordnet sind, daß jeweils die einen Hälften der Kabeleinführungsöffnungen im Zentralteil und die korrespondierenden zweiten Hälften im Ringteil ausgeschnitten sind, wobei die Wandungen der Kabeleinführungsöffnungen kegelig zulaufen, daß weiterhin im zusammengesetzten Zustand in den Kabeleinführungsöffnungen angepaßte, kegelige Ringdichtungen eingesetzt sind und daß in den Trennbereichen zwischen den Kabeleinführungsöffnungen Dichtungseinlagen angeordnet sind und daß die Ringdichtungen durch die Druckmittel axial verpreßbar sind.

Vorteile gegenüber dem Stand der Technik ergeben sich mit einem Muffenkopf gemäß der Erfindung besonders dadurch, daß alle Kabeleinführungen in einer Trennfläche eines Muffen kopfes liegen. Hierdurch wird z.B. eine kreisförmige Trennfläche gewählt, doch können beliebige andere sinnvolle geometrische Gestaltungen eingesetzt werden, wie z.B. die Form eines Vieleckes, in dessen Ecken die Kabeleinführungsöffnungen angeordnet sind oder in Form eines Ovals. Weiterhin ist von Vorteil, daß die Abdichtungen mit Hilfe von elastischen Dichtungseinsätzen in Form von kegeligen Ringdichtungen erfolgen kann, wobei die Abdichtungen zwischen den einzelnen Kabeleinführungen mit dem gleichen Material erfolgen können. Die letztgenannten Abdichtungen können auch durch seitliche Ansätze an den Ringdichtungen erfolgen, so daß nur ein einziger Typ von Dichtungselementen benötigt wird. Der kegeligen Form der Ringdichtungen entsprechend sind auch die Kabeleinführungsöffnungen kegelig ausgebildet. Die Ringdichtungen werden nach der Kabelmontage mittels Druckmittel axial so verpreßt, daß sie eine ausreichende Dichtung zwischen der kegeligen Kabeleinführungsöffnung und dem im Inneren der Ringdichtung eingeführten Kabel ergibt. Diese Abdichtung ist wieder lösbar und wieder verwendbar. Wenn die Ringdichtungen in Längsrichtung geteilt sind oder zumindest einen Längsschlitz aufweisen, können sie auch bei ungeschnittenen Kabeln verwendet werden. Die Montage des Muffenkopfes ist einfach; denn das Zentralteil wird zwischen den einzuführenden Kabeln eingeschoben und dann wird das Ringteil des Muffenkopfes aufgeschoben. Zur Abdichtung der Kabel werden die Ringdichtungen aufgesteckt. Die Verpressung der Ringdichtungen in den Kabeleinführungsöffnungen erfolgt dann anschließend mit Hilfe der Druckmittel. Beim Einsatz eines solchen Muffenkopfes in einer Topfmuffe lassen sich ohne weiteres ungeschnittene bzw. verspleißte Kabel montiert. Das Ringteil des Muffenkopfes kann von der Topfmuffenseite bzw. Spleißseite her auf das vormontierte Zentralteil aufgeschoben werden. Wenn diese erfindungsgemäßen Muffenköpfe auch bei einer langgestreckten, doppelseitigen Kabelmuffe (Durchgangsmuffe) mit ungeschnittenen Kabeln verwendet werden soll, muß man geteilte Ringteile für den Muffenkopf verwenden, die dann von außen her aufgesetzt und miteinander durch entsprechende Klemmittel verklemmt werden. Das Prinzip des erfindungsgemäßen Muffenkopfes ist jedoch voll erhalten; denn auch hier sind die erfindungsgemäßen Maßnahmen und Gestaltungen wie die kegeligen Ausbildungen der Kabeleinführungen und der Ringdichtungen sowie die axiale Verpressung mittels eines Druckmittels in der gleichen Weise vorherrschend.

Die Erfindung wird nun anhand von 13 Figuren näher erläutert.
- Figur 1: zeigt die Anordnung eines Muffenkopfes am Ende einer Kabelmuffe.
- Figur 2: zeigt die Frontseitige Ansicht eines Muffenkopfes.
- Figur 3: zeigt den in Figur 2 angegebenen Schnitt.
- Figur 4: zeigt den Einsatz einer verwendeten Ringdichtung in Frontansicht.
- Figur 5: zeigt eine erste Ausbildung von seitlichen Ansätzen an der Ringdichtung.
- Figur 6: zeigt eine zweite Ausbildung von seitlichen Ansätzen an der Ringdichtung.
- Figur 7: zeigt eine dritte Ausbildung von seitlichen Ansätzen an der Ringdichtung.
- Figur 8: zeigt eine aus mehreren Ringdichtungen und zwischenliegenden Dichtungseinlagen bestehendes Dichtungsformteil.
- Figur 9: zeigt ein auf eine Kabeleinführungsdichtung wirkendes Druckmittel im Schnittbild.
- Figur 10: zeigt die Anordnung nach Figur 9 in Draufsicht.
- Figur 11: zeigt Druckmittel für jeweils mehr als eine Kabeleinführung.
- Figur 12: zeigt als Druckmittel eine geteilte Ringschraube in Draufsicht.
- Figur 13: zeigt die Ausbildung nach Figur 12 in einem Schnittbild.

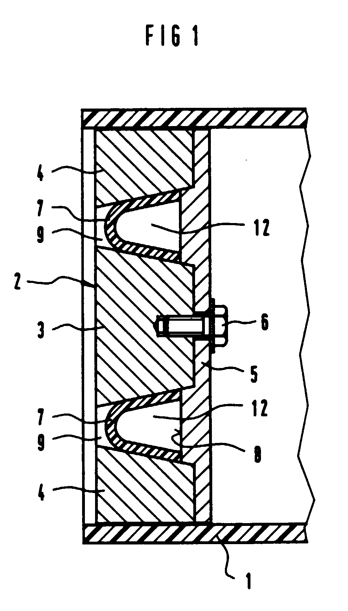

Die Figur 1 vermittelt das Prinzip der vorliegenden Erfindung in einem Schnittbild durch eine Kabelmuffe 1, die z.B. auch als Topfmuffe ausgebildet sein kann, und einen Muffenkopf 2, in dem die erfindungsgemäßen Merkmale vereinfacht dargestellt sind. Es handelt sich dabei um einen geteilten Muffenkopf 2 aus einem Zentralteil 3 und einem das Zentralteil 3 umgebenden Ringteil 4, wobei Kabeleinführungöffnungen 9 in der Trennfläche zwischen dem Zentralteil 3 und dem Ringteil 4 angeordnet sind. In diesen Kabeleinführungsöffnungen 9, die kegelförmig nach auswärts verjüngend ausgebildet sind, werden ebenfalls kegelförmig geformte Ringdichtungen 7 eingesetzt. Diese Ringdichtungen 7 sind hier am engen Ende verschlossen und dienen z.B. bei Nichtbedarf als dichtende Abschlüsse. Wenn Kabel im Inneren 12 der Ringdichtungen 7 eingeführt werden sollen, werden diese je nach Durchmesser des Kabels an der entsprechenden Stelle abgeschnitten, so daß auf diese Weise bereits eine Durchmessergrobanpassung erfolgt. Auf der Innenseite des Muffenkopfes 2 wird dann ein Druckmittel 5 z.B. mit Druckschrauben 6 installiert, wobei dieses z.B. als Scheibe ausgebildete Druckmittel in den Bereichen der Kabeleinführungsöffnungen 9 Ansätze 8 aufweist, die in die Kabeleinführungsöffnungen eintauchen und dadurch die Ringdichtungen 7 auf die eingeführten Kabel verpressen. Auf diese einfache Weise erfolgt die Abdichtung zwischen den Wandungen der Kabeleinführungsöffnungen 9 und den eingeführten Kabeln.

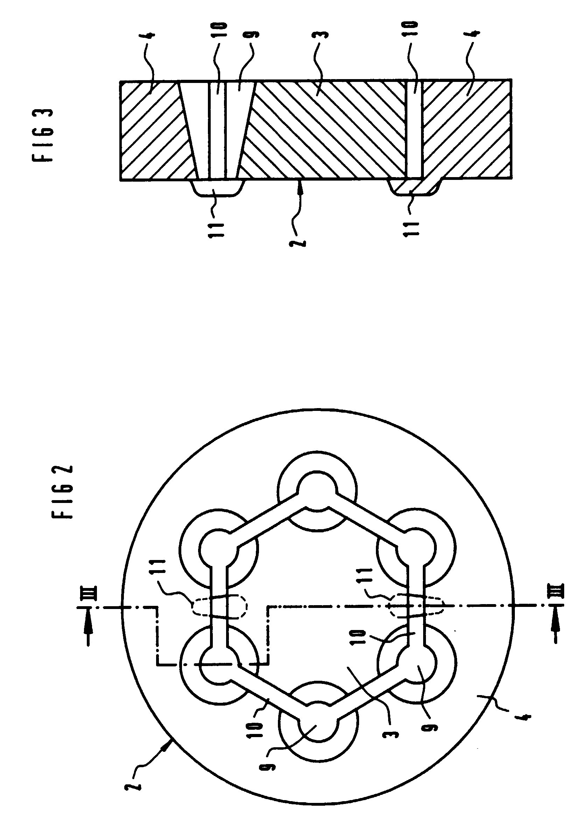

In Figur 2 wird die Ausbildung des Muffenkopfes 2 deutlich gemacht. Es besteht aus dem Zentralteil 3 und dem umschliessenden Ringteil 4. Die zwischen beiden liegende Trennlinie bildet ein Vieleck, wobei in den Ecken des Vieleckes die kegeligen Einführungsöffnungen 9 angeordnet sind. Zwischen den einzelnen Kabeleinführungsöffnungen 9 verlaufen die Trennungsbereiche 10 der Teilungslinien in geraden Teilstücken. Außerdem ist angedeutet, daß auf der Gegenseite des Muffenkopfes Anschläge 11 angeordnet sind, die als Anschlaghilfe derbeiden Muffenkopfteile bei der Montage dienen.

Der in Figur 2 angedeutete Schnitt III - III wird in Figur 3 gezeigt und verdeutlicht, ebenso die kegelige Ausbildung der Kabeleinführungsöffnungen 9 zwischen dem Ringteil 4 und dem Zentralteil 3. Außerdem sind in diesem Querschnittsbild Trennbereiche 10 sichtbar, die zwischen den Kabeleinführungsöffnungen 9 verlaufen. Auf einer Seite des Muffenkopfes 2 sind die Anschläge 11 erkennbar, mit denen die gegenseitige Position eindeutig festgelegt wird.

Figur 4 vermittelt den Einsatz einer kegelig ausgebildeten Ringdichtung 7 in einer Kabeleinführungsöffnung 9. Diese Ringdichtung 7 besitzt nun zwei seitliche Ansätze 13, die so angeformt sind, daß sie in die Trennbereich 10 zwischen den Kabeleinführungsöffnungen 9 hineinragen, wobei jeweils die Ansätze 13 von zwei benachbarten Ringdichtungen 7 sich ergänzen und somit nach dem Verpressen die nötige Abdichtung ergeben. Die angedeuteten Schnitte V - VII verweisen auf die folgenden Schnittbilder 5 - 7. Außerdem ist hier noch angedeutet, daß das Ringteil 4 auch in Trennungen 22 geteilt sein kann, um den Einsatz an Durchgangsmuffen zu ermöglichen. Weiterhin können die Ringdichtungen 7 mit einem Langschlitz 15 versehen sein, so daß der Einsatz an ungeschnittenen Kabeln möglich ist.

Figur 5 zeigt im Schnittbild, daß die Ansätze 13 von den Ringdichtungen 7 so ausgebildet sind, daß in den Trennbereichen 10 über die gesamte Länge hindurch eine gleichmäßige Berührung stattfindet.

Figur 6 zeigt, daß die Ansatze nur als kleine Teilansätze 13a ausgebildet sind und sich nur über eine kurze Teillänge der Teilbereiche 10 erstrecken.

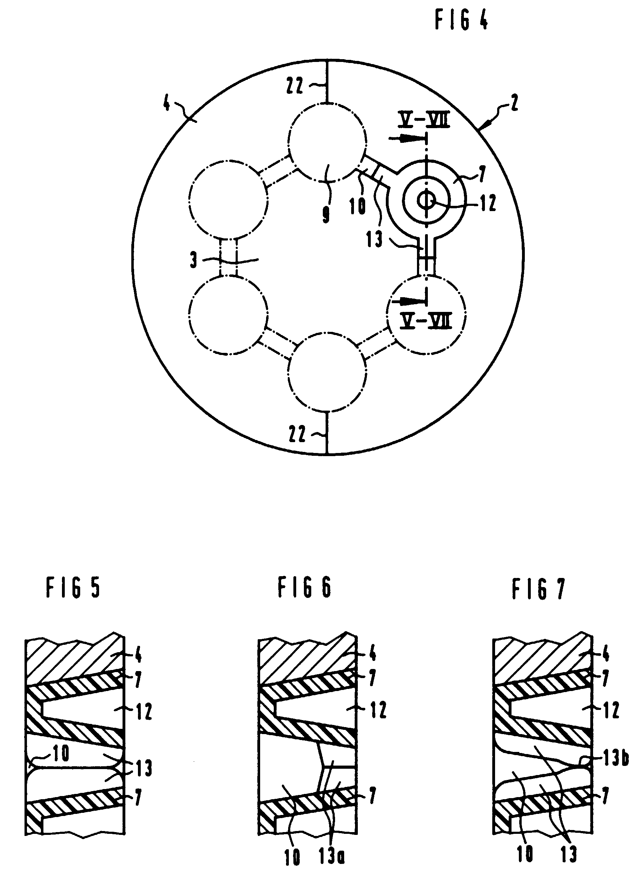

Figur 7 zeigt, daß die in den Teilbereichen 10 reichenden Ansätze 13 in Teilbereichen mit Ausformungen 13b versehen sind, die sich am Weitenbereich der Kabeleinführungsöffnungen 9 befinden. Hiermit wird beispielsweise bei Einführung des Dichtungsringes eine Vorführung erreicht, wobei aber die Kraft zur Verpressung sich erst im letzten Teil des Preßweges aufbaut.

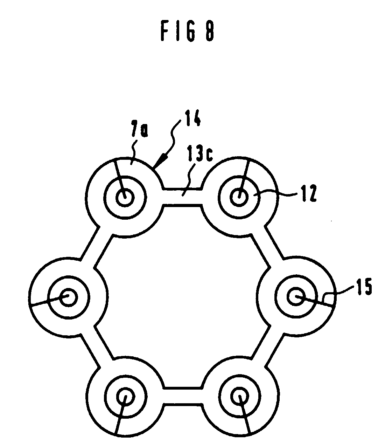

In Figur 8 wird ein Dichtungsformteil 14 dargestellt, daß alle Ringdichtungen 7a und die dazwischenliegende Dichtungseinlagen 13c der gesamten Trennfläche umfaßt und daß in dieser Form in den Muffenkopf zwischen dem Zentralteil 3 und dem Ringteil 4, z.B. nach Figur 4, eingeführt wird. Die einzelnen Kabel werden durch die Längsschlitze 15 ins Innere 12 der Ringdichtungen 7a eingesetzt, wobei vorher der entsprechende Abschnitt erfolgen muß.

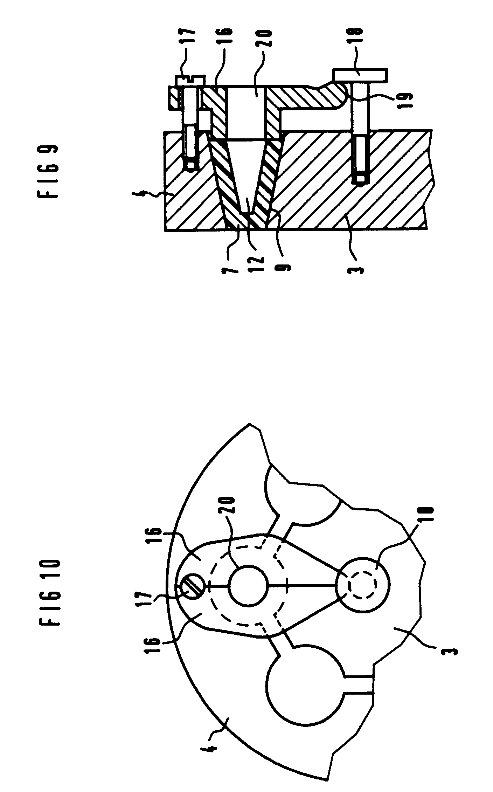

Die Figur 9 macht deutlich, wie z.B. für jede Kabeleinführungsöffnung 9 eine Druckvorrichtung vorgesehen werden kann, die aus zwei Schenkelteilen 16 besteht. Diese Schenkelteile 16 bilden im zusammengesetzten Zustand eine Kabeldurchführungsöffnung 20, die in der Position der Kabeleinführungsöffnung 9 liegt und den Durchlaß für das Kabel ergibt. Auf der der Ringdichtung 7 zugewandten Seite ragt diese Druckvorrichtung in die Kabeleinführungsöffnung 9 hinein und wirkt beim axialen Einpressen mittels Schrauben 17 und 18 auf die eingesetzte Ringdichtung 7. Diese wird verformt und bildet schließlich die Abdichtung zum eingeführten Kabel. Ein Filmscharnier 19 oder ein ähnliches Verbindungselement hält die beiden Schenkelteile 16 an einem Ende zusammen und gewährleistet damit eine einfache Montage.

Die Druckvorrichtung nach Figur 9 wird in Figur 10 in einer Draufsicht gezeigt und verdeutlicht hier, daß die beiden Schenkelteile 16 in montiertem Zustand die Kabeldurchführungsöffnung 20 bilden und daß diese Schenkelteile 16 mittels der Schrauben 17 und 18 gehalten sind. Durch Eindrehen der beiden Schrauben 17 und 18 wird der axiale Druck erzeugt. Auf diese Weise kann jede Kabeleinführungsöffnung eines Muffenkopfes mit einem Druckmittel bestückt werden.

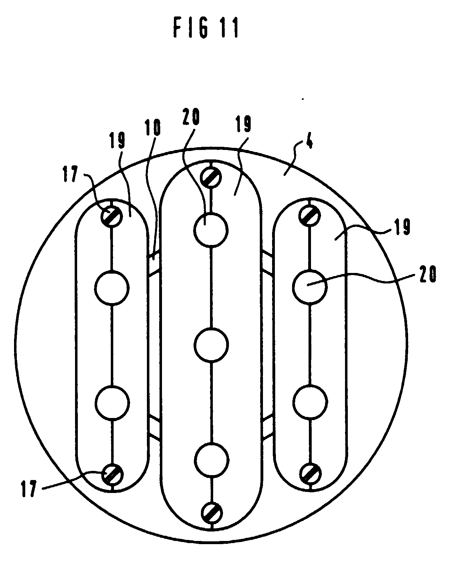

Die Figur 11 zeigt eine Variante zu dem Beispiel nach Figur 10, wobei mit der gleichen Art von Druckmitteln 19 lediglich mehrere Kabeleinführungsöffnungen überbrückt werden. Der übrige Aufbau des Muffenkopfes ist jedoch völlig gleich.

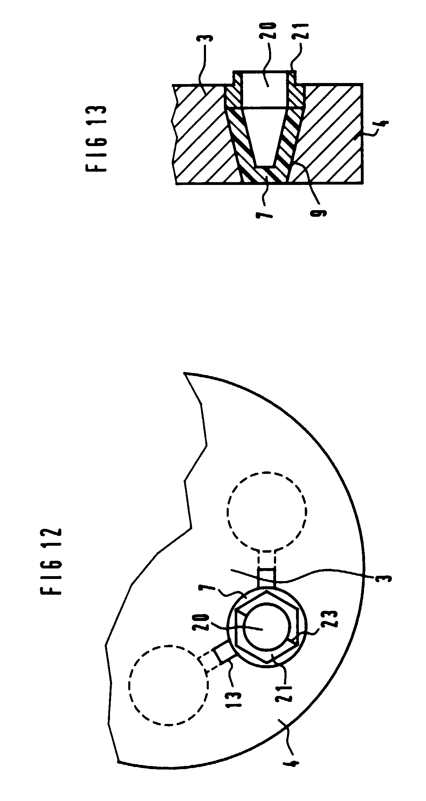

In Figur 12 wird eine weitere Möglichkeit für den Einsatz eines Druckmittels erläutert. Hier wird nämlich eine Ringmutter 21 verwendet, die in ein Gewinde im weiten Ende der Kabeleinführungsöffnung 9 eingeschraubt wird und auf diese Weise den axialen Druck auf die eingelegte Ringdichtung 7 und dessen Ansätze 13 ausübt. Durch die Durchführungöffnung 20 wird das eingeführte Kabel hindurchgeführt. Die übrigen Verhältnisse bleiben erhalten.

Figur 13 verdeutlicht in einem Querschnittsbild die Ausbildung der Druckvorrichtung nach Figur 12 mit der Ringmutter 21, wobei das Gewinde und damit der zylindrische Bereich der Kabeleinführungsöffnung 9 soweit reicht, daß die maximal benötigte Anpressung und damit das erforderliche Eintauchen des Druckmittels in die Kabeleinführungsöffnung erreicht werden kann. Diese Ausbildung gilt auch für alle anderen Druckvorrichtungen.

## Patentansprüche

1. Muffenkopf (2) mit mehreren in Länßsrichtung geteilten Kabeleinführungen mit Ringdichtungen (7,7a) aus elastischen Material in den Einführungsöffnungen (9) und mit Druckmitteln (5,16),
**dadurch gekennzeichnet**,
daß er (2) aus einem Zentralteil (3) und einem korrespondierenden Ringteil (4) besteht,
daß die Kabeleinführungsöffnungen (9) in der Trennfläche zwischen dem Zentralteil (3) und dem Ringteil (4) so angeordnet sind, daß jeweils die einen Hälften der Kabeleinführungsöffnungen (9) im Zentralteil (3) und die korrespondierenden zweiten Hälften im Ringteil (4) ausgeschnitten sind, wobei die Wandungen der Kabeleinführungsöffnungen (9) kegelig zulaufen, daß im zusammengesetzten Zustand in den Kabeleinführungsöffnungen (9) angepaßte, kegelige Ringdichtungen (7, 7a) eingesetzt sind und daß in den Trennbereichen (10) zwischen den Kabeleinführungsöffnungen (9) Dichtungseinlagen (13) angeordnet sind und daß die Ringdichtungen (7, 7a) durch die Druckmittel (5, 16) axial verpreßbar sind..

2. Muffenkopf nach Anspruch 1,
**dadurch gekennzeichnet**,
daß die Trennungslinie ein Vieleck bildet, wobei jeweils in den Ecken eine Kabeleinführungsöffnung (9) angeordnet ist.

3. Muffenkopf nach Anspruch 1,
**dadurch gekennzeichnet**,
daß die Trennungslinie ein Oval bildet.

4. Muffenkopf nach Anspruch 1,
**dadurch gekennzeichnet**,
daß die Trennungslinie einen Kreis bildet.

5. Muffenkopf nach einem der vorhergehenden Ansprüche,
**dadurch gekennzeichnet**,
daß die Ringdichtungen (7a) und die Dichtungseinlagen (13c) ein einziges, zusammenhängendes Formteil (14) bilden.

6. Muffenkopf nach einem der Ansprüche 1 bis 4,
**dadurch gekennzeichnet**,
daß die Ringdichtungen (7) seitliche Ansätze (13, 13a) aufweisen, die ausgehend von den Kabeleinführungsöffnungen (9) sich in die Trennbereiche (10) zwischen den Kabeleinführungsöffnungen (9) erstrecken und die Verbindung zwischen den einzelnen Ringdichtungen ergeben.

7. Muffenkopf nach Anspruch 6,
**dadurch gekennzeichnet**,
daß die Ansätze (13) sich über die ganze Länge der Kabeleinführungsöffnung (9) erstrecken.

8. Muffenkopf nach Anspruch 6,
**dadurch gekennzeichnet**,
daß die Ansätze (13a) sich über Teillängen der Kabeleinführungsöffnungen (9) erstrecken.

9. Muffenkopf nach einem der Ansprüche 6 bis 8,
**dadurch gekennzeichnet**,
daß die Ansätze (13) Ausformungen (13b), insbesondere in den weiten Bereichen der Kabeleinführungsöffnungen (9), aufweisen.

10. Muffenkopf nach einem der vorhergehenden Ansprüche,
**dadurch gekennzeichnet**,
daß eine das Zentralteil (3) und Ringteil (4) überdeckende Druckplatte (5) angeordnet ist, bei der an den Stellen der Kabeleinführungsöffnungen (9) eintauchende Ansätze (8) in Form von Hülsen angeformt sind.

11. Muffenkopf nach einem der Ansprüche 1 bis 9,
**dadurch gekennzeichnet**,
daß für jede Kabeleinführungsöffnung (9) eine separate Druckvorrichtung (16) angeordnet ist.

12. Muffenkopf nach Anspruch 10,
**dadurch gekennzeichnet**,
daß die Druckplatte (5) entsprechend der Teilungsform von Zentralteil (3) und Ringteil (4) geteilt ist.

13. Muffenkopf nach Anspruch 11,
**dadurch gekennzeichnet**,
daß jede Druckvorrichtung (16) quer über die Kabeleinführungsöffnung (9) hinweggeteilt ist.

14. Muffenkopf nach einem der vorhergehenden Ansprüche,
**dadurch gekennzeichnet**,
daß am Zentralteil (3) und/oder am Ringteil (4) und/oder an der Druckvorrichtung (5) zur gegenseitigen Fixierung dienende Anschläge (11) angeordnet sind.

15. Muffenkopf nach einem der Ansprüche 12 oder 13,
**dadurch gekennzeichnet**,
daß die Einzelteile der Druckplatte (5) bzw. der Druckvorrichtung (16) über ein Gelenk insbesondere über ein Filmscharnier (19) miteinander verbunden sind.

16. Muffenkopf nach einem der vorhergehenden Ansprüche,
**dadurch gekennzeichnet**,
daß die Ringdichtungen (7, 7a) aus Gummi, vorzugsweise Silikongummi, bestehen.

17. Muffenkopf nach einem der vorhergehenden Ansprüche,
**dadurch gekennzeichnet**,
daß die Ringdichtungen (7, 7a) an einem Ende kappenförmig abgeschlossen sind.

18. Muffenkopf nach einem der vorhergehenden Ansprüche,
**dadurch gekennzeichnet**,
daß elastische und plastische Dichtungsmittel in den Dichtungsflächen eingelegt sind.

19. Muffenkopf nach einem der vorhergehenden Ansprüche,
**dadurch gekennzeichnet**,
daß das Ringteil (4) durch eine Trennung (22) in mindestens zwei Hälften geteilt ist und daß die Hälften mittels geeigneter Klemmittel zusammengehalten werden.

## Claims

1. Sleeve head (2) having a plurality of cable inlets, which are split in the longitudinal direction and have annular seals (7, 7a) made from an elastic material in the inlet openings (9), and having pressure means (5, 16), characterized in that it (2) comprises a central part (3) and a corresponding annular part (4), in that the cable inlet openings (9) are arranged in the parting surface between the central part (3) and the annular part (4) in such a way that in each case the first halves of the cable inlet openings (9) are cut out in the central part (3) and the corresponding second halves are cut out in the annular part (4), the walls of the cable inlet openings (9) converging conically, in that use is made in the assembled state of conical annular seals (7, 7a) fitted in the cable inlet openings (9), and in that seal inserts (13) are arranged in the parting regions (10) between the cable inlet openings (9), and in that the annular seals (7, 7a) can be axially pressed by the pressure means (5, 16).

2. Sleeve head according to Claim 1, characterized in that the parting line forms a polygon, a cable inlet opening (9) being arranged in the corners in each case.

3. Sleeve head according to Claim 1, characterized in that the parting line forms an oval.

4. Sleeve head according to Claim 1, characterized in that the parting line forms a circle.

5. Sleeve head according to one of the preceding claims, characterized in that the annular seals (7a) and the seal inserts (13c) form a single, coherent formed part (14).

6. Sleeve head according to one of Claims 1 to 4, characterized in that the annular seals (7) have lateral projections (13, 13a) which, starting from the cable inlet openings (9), extend in the parting regions (10) between the cable inlet openings (9) and produce the connection between the individual annular seals.

7. Sleeve head according to Claim 6, characterized in that the projections (13) extend over the entire length of the cable inlet opening (9).

8. Sleeve head according to Claim 6, characterized in that the projections (13a) extend over sublengths of the cable inlet openings (9).

9. Sleeve head according to one of Claims 6 to 8, characterized in that the projections (13) have outward bulges (13b), in particular in the wide regions of the cable inlet openings (9).

10. Sleeve head according to one of the preceding claims, characterized in that a pressure plate (5) is arranged which covers the central part (3) and annular part (4) and on which projections (8) which dip in at the locations of the cable inlet openings (9) are integrally formed in the form of bushings.

11. Sleeve head according to one of Claims 1 to 9, characterized in that a separate pressure device (16) is arranged for each cable inlet opening (9).

12. Sleeve head according to Claim 10, characterized in that the pressure plate (5) is split in accordance with the shape of the split of the central part (3) and annular part (4).

13. Sleeve head according to Claim 11, characterized in that each pressure device (16) is split transversely over the cable inlet opening (9).

14. Sleeve head according to one of the preceding claims, characterized in that stops (11) serving the purpose of mutual fixing are arranged on the central part (3) and/or on the annular part (4) and/or on the pressure device (5).

15. Sleeve head according to one of Claims 12 or 13, characterized in that the individual parts of the pressure plate (5) or of the pressure device (16) are connected to one another via an articulation, in particular via a film hinge (19).

16. Sleeve head according to one of the preceding claims, characterized in that the annular seals (7, 7a) consist of rubber, preferably silicone rubber.

17. Sleeve head according to one of the preceding claims, characterized in that the annular seals (7, 7a) are sealed like a cap at one end.

18. Sleeve head according to one of the preceding claims, characterized in that elastic and plastic sealing means are inserted in the sealing surfaces.

19. Sleeve head according to one of the preceding claims, characterized in that the annular part (4) is split by a parting line (22) into at least two halves, and in that the halves are held together by means of suitable clamping means.

## Revendications

1. Tête (2) de manchon, ayant plusieurs entrées de câble fendues dans la direction longitudinale qui comportent des garnitures (7, 7a) d'étanchéité annulaires en matériau élastique dans les ouvertures (9) d'introduction et des moyens (5, 16) d'exercer une pression, caractérisée en ce qu'elle est constituée d'une pièce (3) centrale et d'une pièce (4) annulaire correspondante, en ce que les ouvertures (9) d'introduction de câble sont ménagées dans les surfaces de joint comprises entre la pièce (3) centrale et la pièce (4) annulaire de manière que l'une des moitiés de chacune des ouvertures (9) d'introduction de câble soit découpée dans la pièce (3) centrale et la deuxième moitié correspondante dans la pièce (4) annulaire, les parois des ouvertures (9) d'introduction de câble se terminant de manière conique, en ce que, à l'état assemblé, il est introduit dans les ouvertures (9) d'introduction de câble des garnitures (7, 7a) d'étanchéité annulaires coniques adaptées et en ce qu'il est monté dans les zones (10) de joint comprises entre les ouvertures (9) d'introduction de câble des inserts (13) d'étanchéité et en ce que les garnitures (7, 7a) d'étanchéité annulaires peuvent être comprimées axialement par les moyens (5, 16) servant à exercer une pression.

2. Tête de manchon suivant la revendication 1, caractérisée en ce que la ligne de joint forme un polygone, une ouverture (9) d'introduction étant ménagée à chacun des sommets.

3. Tête de manchon suivant la revendication 1, caractérisée en ce que la ligne de joint forme un ovale.

4. Tête de manchon suivant la revendication 1, caractérisée en ce que la ligne de joint forme un cercle.

5. Tête de manchon suivant l'une des revendications précédentes, caractérisée en ce que les garnitures (7a) d'étanchéité annulaires et les inserts (13c) d'étanchéité forment une pièce (14) moulée unique d'un seul tenant.

6. Tête de manchon suivant l'une des revendications 1 à 4, caractérisée en ce que les garnitures (7) d'étanchéité annulaires comportent des prolongements (13, 13a) latéraux qui s'étendent des ouvertures (9) d'introduction de câble aux zones (10) de joint et qui forment la liaison entre les garnitures d'étanchéité individuelles.

7. Tête de manchon suivant la revendication 6, caractérisée en ce que les prolongements (13) s'étendent sur toute la longueur des ouvertures (9) d'introduction de câble.

8. Tête de manchon suivant la revendication 6, caractérisée en ce que les prolongements (13a) s'étendent sur des longueurs partielles des ouvertures (9) d'introduction de câble.

9. Tête de manchon suivant l'une des revendications 6 à 8, caractérisée en ce que les prolongements (13) comportent des bosses (13b), notamment dans les zones larges des ouvertures (9) d'introduction de câble.

10. Tête de manchon suivant l'une des revendications précédentes, caractérisée en ce qu'il est superposé à la pièce (3) centrale et à la pièce (4) annulaire une plaque (5) d'application d'une pression dont il est issu, sous forme de douilles, des prolongements (8) pénétrant aux emplacements des ouvertures (9) d'introduction de câble.

11. Tête de manchon suivant l'une des revendications 1 à 9, caractérisée en ce qu'il est monté un dispositif (16) distinct pour exercer une pression pour chaque ouverture (9) d'introduction de câble.

12. Tête de manchon suivant la revendication 10, caractérisée en ce que la plaque (5) d'application d'une pression est fendue suivant la forme de la séparation de la pièce (3) centrale et de la pièce (4) annulaire.

13. Tête de manchon suivant la revendication 11, caractérisée en ce que chaque dispositif (16) pour exercer une pression est fendu transversalement sur toute la longueur sur l'ouverture (9) d'introduction de câble.

14. Tête de manchon suivant l'une des revendications précédentes, caractérisée en ce qu'il est monté sur la pièce (3) centrale et/ou sur la pièce (4) annulaire et/ou sur le dispositif (5) pour exercer une pression des butées (11) servant à les immobiliser mutuellement.

15. Tête de manchon suivant l'une des revendications 12 ou 13, caractérisée en ce que les pièces individuelles de la plaque (5) d'application d'une pression et du dispositif (16) pour exercer une pression sont reliées l'une à l'autre par l'intermédiaire d'une articulation, notamment par l'intermédiaire d'une charnière (19) pelliculaire.

16. Tête de manchon suivant l'une des revendications précédentes, caractérisée en ce que les garnitures (7, 7a) d'étanchéité annulaires sont en caoutchouc, de préférence en caoutchouc silicone.

17. Tête de manchon suivant l'une des revendications précédentes, caractérisée en ce que les garnitures (7, 7a) d'étanchéité annulaires se terminent en forme de chapeau à une extrémité.

18. Tête de manchon suivant l'une des revendications précédentes, caractérisée en ce que des moyens d'étanchéité élastiques et plastiques sont insérés dans les surfaces d'étanchéité.

19. Tête de manchon suivant l'une des revendications précédentes, caractérisée en ce que la pièce (4) annulaire est fendue en au moins deux moitiés par une séparation (22) et en ce que les moitiés peuvent être maintenues ensemble par des moyens de serrage adaptés.
